# EUROPEAN PATENT SPECIFICATION

(11) **EP 0 752 750 B1**
(45) Date of publication and mention of the grant of the patent: **20.03.2002**
(21) Application number: 96303111.7
(22) Date of filing: 02.05.1996
(51) Int. Cl.: H02M 1/08, H02M 7/515, H02M 7/00

(54) **Thyristor module**
Thyristormodul
Module de thyristor

(30) Priority: 11.05.1995 JP 11318195
(43) Date of publication of application: 08.01.1997
(73) Proprietor: KABUSHIKI KAISHA TOSHIBA, Kawasaki-shi, Kanagawa-ken 210-8572 (JP)
(72) Inventor: Fujimoto, Takafumi, c/o Intellectual Property Div., Minato-ku, Tokyo (JP)
(74) Representative: Shindler, Nigel

(56) References cited:
- US-A- 5 045 924
- PATENT ABSTRACTS OF JAPAN vol. 015, no. 254 (E-1083), 27 June 1991 & JP 03 082150 A (TOSHIBA CORP), 8 April 1991,
- PATENT ABSTRACTS OF JAPAN vol. 017, no. 535 (E-1439), 27 September 1993 & JP 05 146142 A (TOSHIBA CORP), 11 June 1993,

## Description

### Field of the Invention

This invention relates to a thyristor module, and more particularly to a thyristor module which is incorporated in, for example, a power converter.

### Description of the Related Art

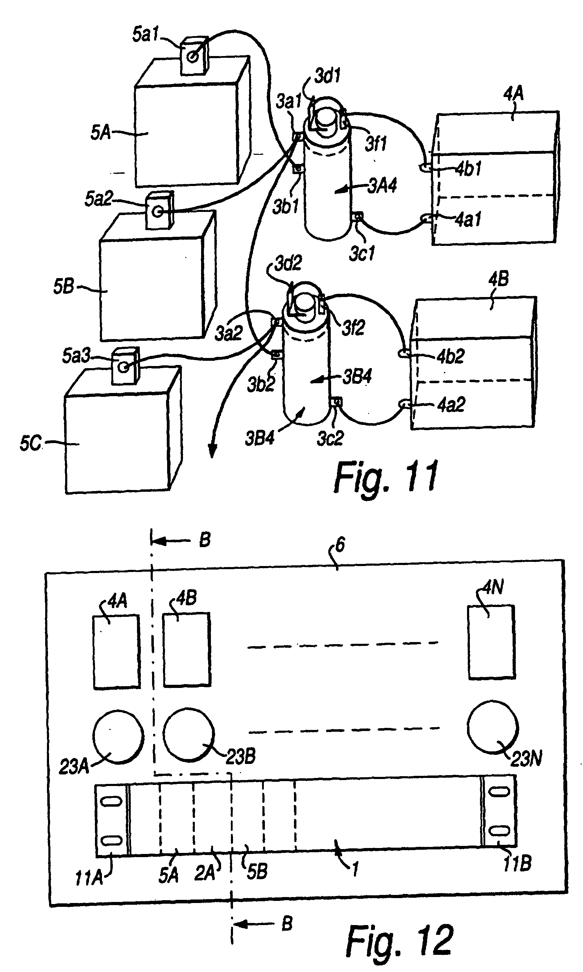

FIGURE 12 is a plan view showing one example of a thyristor module which is incorporated in a power converter which is installed in, such as, DC power transmission facilities.

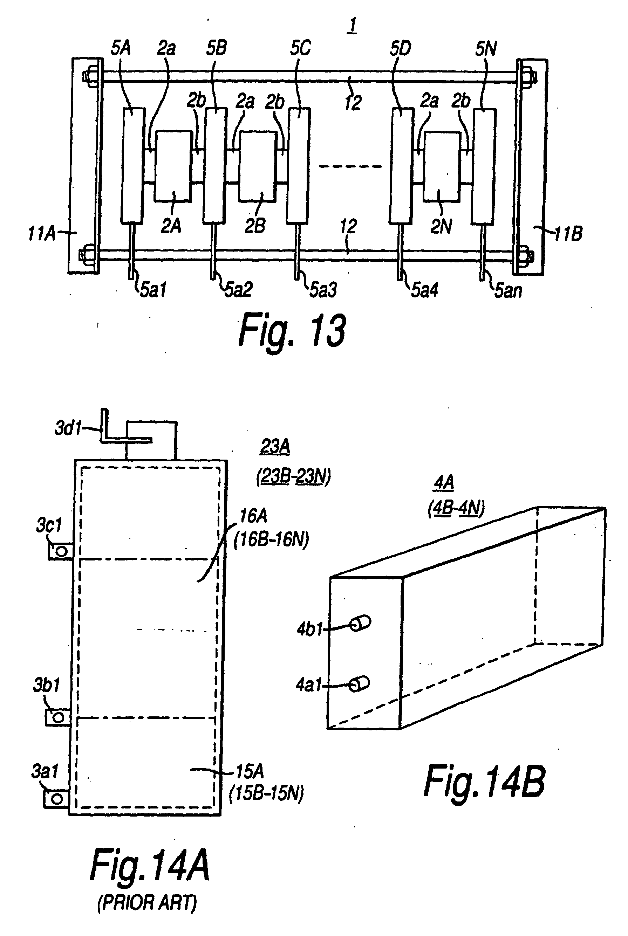

In FIGURE 12, a thyristor stack 1, which will be described later with reference to FIGURE 13, is fixed on the front part of a mounting plate 6 by bolts through mounting legs 11A and 11B at its both ends.

Composite resistors 23A, 23B, ... 23N are mounted on mounting plate 6, which will be described in detail with reference to FIGURE 14A, installed in a line behind this thyristor stack 1. Further, snubber capacitors 4A, 4B, ... 4N are mounted on mounting plate 6, which are in the same numbers as composite resistors 23A, 23B, ... 23N and will be described later with reference to FIGURE 14B, installed in a line behind these composite resistors 23A, 23B, ... 23N.

FIGURE 13 is a plan view showing the enlarged detail of thyristor stack 1 shown in FIGURE 12. In FIGURE 13, between thyristors 2A, 2B, ... 2N, water-cooled heat sinks 5B, 5C, ... 5D for cooling thyristors 2A, 2B, ... 2N are sandwiched from the left side, respectively. A water-cooled heat sink 5A for cooling thyristor 2A is positioned at the left side of thyristor 2A at the left end, and a water-cooled heat sink 5N for cooling thyristor 2N is positioned at the right side of thyristor 2N at the right end.

At the further outsides of water-cooled heat sinks 5A and 5N at both ends, mounting legs 11A and 11B are positioned through coned disc springs (not shown), and these parts are fastened by studs 12 and nuts penetrating mounting legs 11A and 11B, thereby to form thyristor stack 1.

In front of water-cooled heat sinks 5A, 5B, 5C ... 5D and 5N, there are provided terminals 5a1, 5a2, 5a3 ... 5a4 and 5an projecting from respective heat sinks 5A, 5B, 5C, ... 5D and 5N.

The end surface of an anode electrode 2a provided at the left side of thyristor 2A is in contact with the right side surface of water-cooled heat sink 5A, and a cathode electrode 2b provided at the right side of thyristor 2A is in contact with the left side surface of water-cooled heat sink 5B at the right side. Accordingly, terminal 5a1 forms a connecting part for anode electrode 2a of thyristor 2A.

Similarly, the right side surface of water-cooled heat sink 5B is in contact with an anode electrode 2a of thyristor 2B at its right side, and a cathode electrode 2b of thyristor 2B is in contact with the left side surface of water-cooled heat sink 5C at its right side. Accordingly, terminal 5a2 forms a connecting part for cathode electrode 2b of thyristor 2A and for anode electrode 2a of thyristor 2B.

Similarly, an anode electrode 2a of thyristor 2N at the right end is in contact with the right side surface of water-cooled heat sink 5D at its left side, and a cathode electrode 2b of thyristor 2N is in contact with the left side of water-cooled heat sink 5N at its right side. Accordingly, terminal 5a4 forms a connecting part for anode electrode 2a of thyristor 2N, and terminal 5an forms a connecting part for cathode electrode 2b of thyristor 2N.

On thyristor stack 1 in such construction as described above, thyristors 2A-2N and water-cooled heat sinks 5A-5N overlapped in a line are fastened by a pair of studs 12 at a specified pressure to improve mutual heat transfer between these parts and reduce contact resistance between these parts.

Further, thyristors 2A-2N are connected to composite resistors 23A-23N, snubber capacitors 4A-4N and others described above through terminals 5a1-5an of water-cooled heat sinks 5A-5N sandwitching both ends of respective thyristors 2A-2N, as described later.

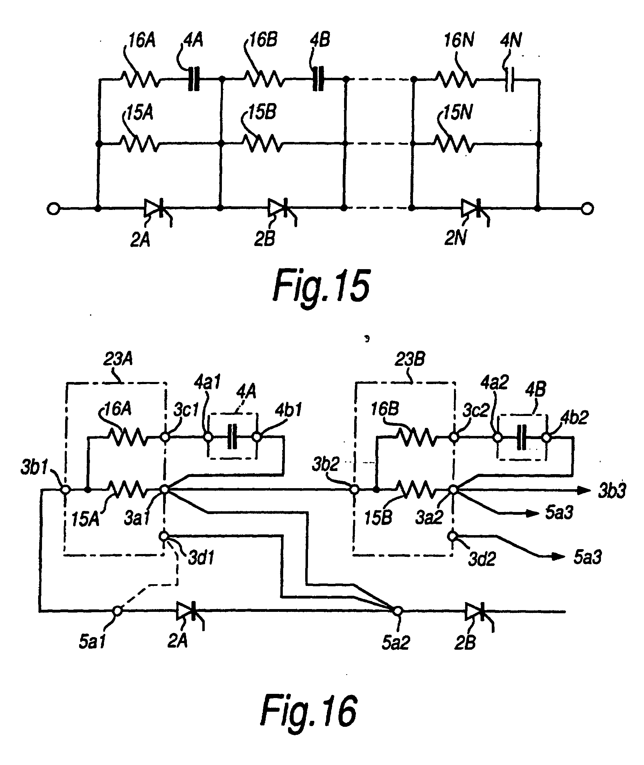

FIGURE 14A is a front view showing the enlarged detail of composite resistors 23A-23N described above. These composite resistors 23A-23N are respectively composed of snubber resistors 16A-16N and DC voltage dividing resistors 15A-15N which are connected in series as described later with reference to FIGURE 15.

In FIGURE 14A, a terminal 3c1 is provided at the upper part of this composite resistor 23A, projecting from the left side surface, and terminal 3b1 and 3a1 are provided in this order below this terminal 3c1, projecting from the left side surface of composite resistor 23A. In addition, there is provided a terminal 3d1 on the top projecting therefrom, which is not connected to an inner resistance wire and used for mechanical fixing and potential fixing.

In composite resistor 23A, DC voltage dividing resistor 15A and snubber resistor 16A are provided as follows. Between terminals 3a1 and 3b1 DC voltage dividing resistor 15A is formed by winding a resistance wire in a cylindrical form, and between terminals 3b1 and 3c1 snubber resistor 16A is formed by winding another resistance wire in a cylindrical form. Composite resistors 23B-23N are respectively constructed the same as composite resistor 23A.

Further, FIGURE 14B is a perspective view showing snubber capacitor 4A, and terminals 4a1 and 4b1 are provided on the left end surface projecting therefrom. Snubber . capacitors 4B-4N are respectively constructed the same as, snubber capacitor 4A.

FIGURE 15 is a connection diagram of a thyristor module composed of thyristors 2A-2N, DC voltage dividing resistors 15A-15N, snubber resistors 16A-16N and snubber capacitors 4A-4N shown in FIGURE 12. FIGURE 16 is a circuit diagram showing the connection of a part of this thyristor module shown in FIGURE 15.

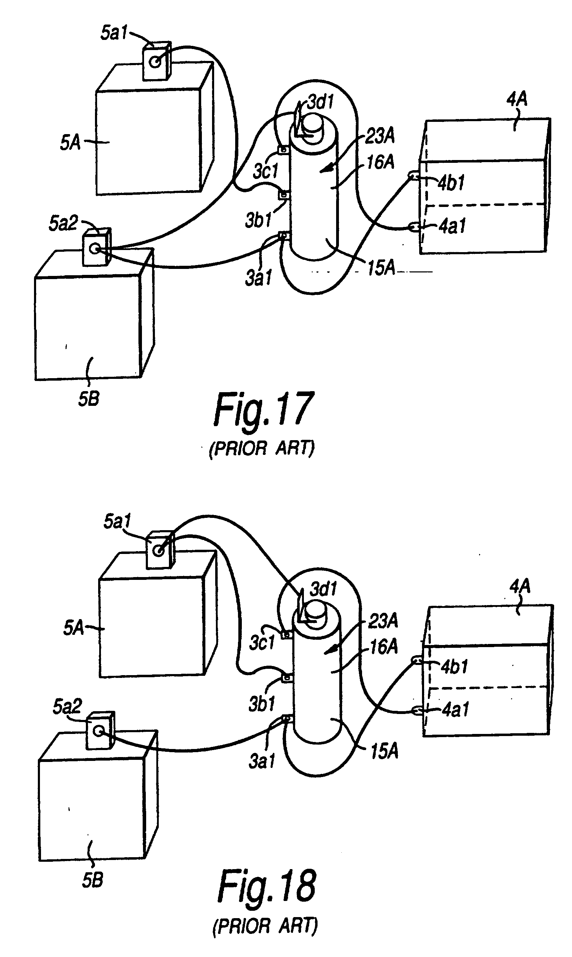

As shown in FIGURE 16, terminal 3b1 of composite resistor 23A is connected to terminal 5a1 of water-cooled heat sink 5A connected to anode electrode 2a of thyristor 2A shown in FIGURE 13. Further, terminal 3d1 of composite resistor 23A is connected to terminal 3a1 of composte resistor 23A via terminal 5a2 of water-cooled heat sink 5B for the purpose of keeping potential at a constant level. A broken line for connecting terminals 3d1 of composite resistor 23A, and terminal 5a1 of water-cooled heat sink 5A will be described later in FIGURE 18.

Terminal 3c1 of snubber resistor 16A of composite resistor 23A is connected to terminal 4a1 of snubber capacitor 4A, and terminal 3a1 of DC voltage dividing resistor 15A of composite resistor 23A is connected to terminal 4b1 of snubber capacitor 4A, terminal 3b2 of composite resistor 23B for thyristor 2B and terminal 5a2 of water-cooled heat sink 5B.

The connection of composite resistor 23B, snubber capacstor 4B, thyristor 2B and others is the same as the thyristors 2A side as shown in FIGURES 15 and 16. Further, the connection of composite resistor 23N, snubber capacitor 4N, thyristor 2N and others is not shown, but is the same as the thyristor 2A side described above.

FIGURE 17 is a perspective view showing the layout and connection of the parts shown in FIGURES 15 and 16, and only the portion relating to water-cooled heat sinks 5A and 5B, thyristor 2A, composite resistor 23A and snubber capacitor 4A in the thyristor module is shown. In FIGURE 17, thyristor 2A is sandwiched between water-cooled heat sinks 5A and 5B. But it is not related to the connection of the parts directly, so it is not shown in FIGURE 17 for the simplicity of the drawing.

In FIGUREs 15 through 17, as terminal 3d1 of composite resistor 23A is connected to terminal 3a1 of composite resistor 23A through terminal 5a2 of water-cooled heat sink 5B, charged voltage in snubber capacitor 4A is applied between terminals 3c1 and 3d1 when thyristor 2A is kept turned OFF.

Further, in the case as shown in FIGURE 18, when terminal 3d1 is connected to terminal 5a1 of water-cooled heat sink 5A instead of terminal 3a1 as shown by the broken line in FIGURE 16, the voltage is applied between terminals 3d1 and 3c1 corresponding to the voltage drop in snubber resistor 16A accompanied with charging and discharging currents of snubber capacitor 4A resulting from the turn-on and turn-off of thyristor 2A.

In the thyristor module shown in any one of FIGUREs 17 and 18, as it is necessary to make a creeping distance between terminals 3c1 and 3d1 of each of composite resistors 23A-23N shown in FIGURE 14 long, the external shape of each of composite resistors 23A-23N becomes large. As a result, the external shape of the thyristor module becomes large.

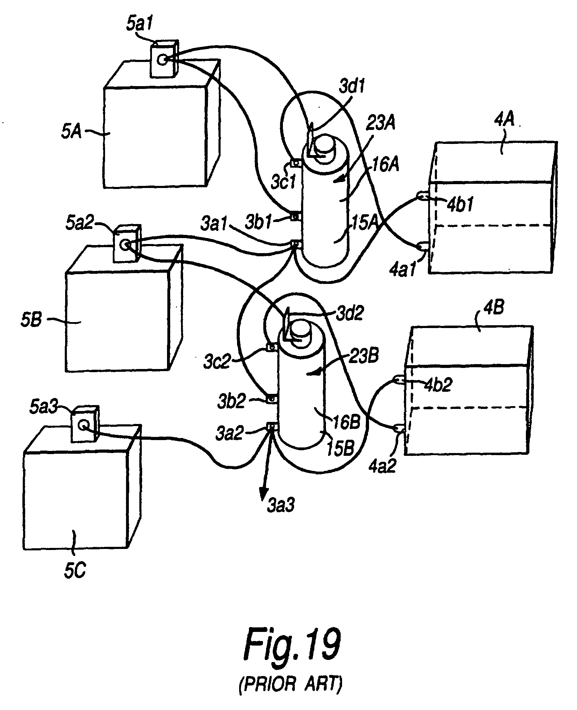

Further, FIGURE 19 is a perspective view of the thyristor module shown in FIGURE 18 showing the connection layout of water-cooled heat sinks 5A, 5B and 5C, composite resistors 23A and 23B, thyristors 2A and 2B, and snubber capacitors 4A and 4B connected as shown in FIGUREs 15 and 16. In FIGURE 19, thyristors 2A and 2B are not shown for the same reason as described above. In FIGURE 19, it is necessary to route wires for connecting respectively terminals 3a1, 3c1, 3a2 and 3c2 of composite resistors 23A and 23B to terminals 4b1, 4a1, 4b2 and 4a2 of snubber capacitors 4A and 4B via the side of or above composite resistors 23A and 23B.

As a result, the distance between composite resistors 23A and 23B is to be made large from the viewpoint of the withstanding voltages between these wires and those between these wires and terminals. Similarly, the distances between adjacent composite resistors 23B-23N are to be made large from the same withstanding voltage viewpoint. Corresponding to the positions of composite resistors 23A-23N, the distances between adjacent snubber capacitors 4A-4N, and the distances between adjacent water-cooled heat sinks 5A-5N become large. As a result, the external shape of the thyristor module becomes large.

Furthermore, the wiring between these parts is complicated, as is clear from FIGURE 19.

### SUMMARY OF THE INVENTION

Accordingly, one object of this invention is to provide a thyristor module of which external shape can be made small.

These and other objects of this invention can be achieved by providing a thyristor module for mounting a circuit. The circuit is composed of a plurality of series connected thyristors, a plurality of DC voltage dividing resistors, each being respectively connected in parallel with one of the thyristors, and plurality of series circuits of a snubber resistor and asnubber capacitor, each being respectively connected in parallel with one of the thyristors. The thyristor module includes a mounting board, a thyristor stack mounted on the mounting board, composed of the thyristors and a plurality of heat sinks for cooling the thyristors, and a plurality of composite resistors mounted on the mounting board and arranged behind the thyristor stack. The thyristor module further includes a plurality of snubber capacitors mounted on the mounting board and arranged behind the composite resistors, and wiring members for connecting between the composite resistors, the heat sinks and the snubber capacitors to form the circuit. Each of the heat sinks is provided with a terminal electrically connected to at least an anode electrode and a cathode electrode of one of the thyristors, respectively. Each of the composite resistors has at least three terminals to form the DC voltage dividing resistor between an upper side terminal and an intermediate terminal and to form the snubber resistor between the intermediate terminal and a lower side terminal. Each of the snubber capacitors is provided with terminals projecting to one of the composite resistors, respectively.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIGURE 1 is a front view of a composite resistor in a thyristor module according to a first embodiment of this invention;
FIGURE 2 is a perspective view of a part of the thyristor module according to the first embodiment of this invention;
FIGURE 3 is a sectional view of a thyristor module according to a second embodiment of this invention;
FIGURE 4 is a perspective view of a part of the thyristor module according to the second embodiment of this invention;
FIGURE 5 is a sectional view of a thyristor module according to a third embodiment of this invention;
FIGURE 6 is a top view of a composite resistor in the thyristor module according to the third embodiment of this invention;
FIGURE 7 is a perspective view of a part of the thyristor module according to the third embodiment of this invention;
FIGURE 8 is a sectional view of a thyristor module according to a fourth embodiment of this invention;
FIGURE 9 is a perspective view of a part of the thyristor module according to the fourth embodiment of this invention;
FIGURE 10 is a sectional view of a thyristor module according to a fifth embodiment of this invention;
FIGURE 11 is a perspective view of a part of the thyristor module according to the fifth embodiment of this invention;
FIGURE 12 is a plan view of one example of a thyristor module;
FIGURE 13 is a plan view of a thyristor stack in FIGURE 12;
FIGURE 14A is a front view of one example of a composite resistor in a conventional thyristor module;
FIGURE 14B is a perspective view of one example of a snubber capacitor in a thyristor module;
FIGURE 15 is a circuit diagram of one example of a thyristor module;
FIGURE 16 is a circuit diagram showing the connection of a part of one example of a thyristor module;
FIGURE 17 is a perspective view of a part of one example of a conventional thyristor module;
FIGURE 18 is a perspective view of a part of another example of a conventional thyristor module; and
FIGURE 19 is a perspective view of a part of the another example of the conventional thyristor module shown in FIGURE 18.

### DETAILED DESCRIPTION OF THE PREFERRED EMBODIMENTS

Referring now to the drawings, wherein like reference numerals designate identical or corresponding parts throughout the several views, the embodiments of this invention will be described below.

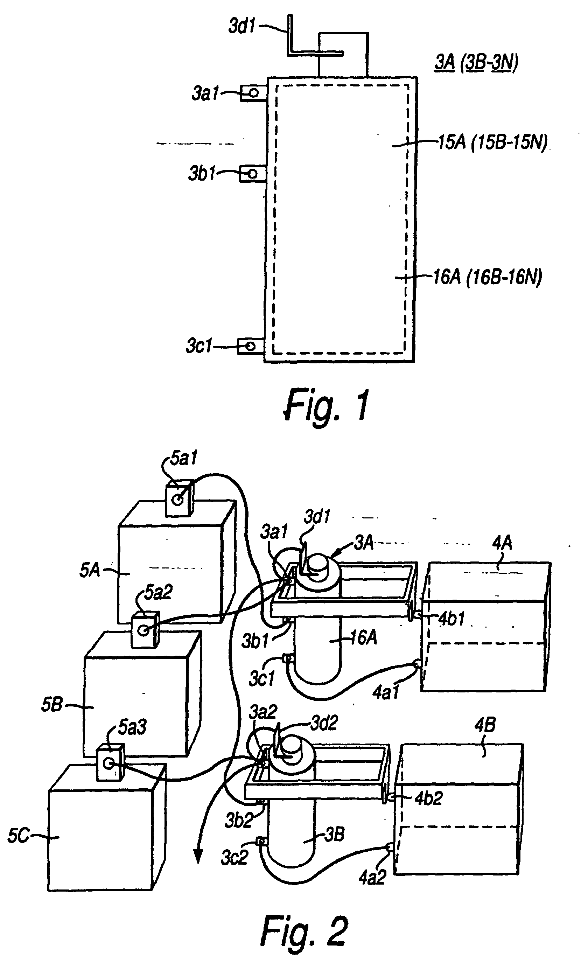

FIGURE 1 is a front view showing a part of a thyristor module according to a first embodiment of the present invention, wherein a composite resistor 3A only is shown, corresponding to FIGURE 14A showing composite resistor 23A in a conventional technology. The layout of the parts in this thyristor module and the circuit diagam of this thyristor module are the same as shown in FIGURES 12 and 15, except that composite resistors 23A-23N are substituted by composite resistors 3A-3N, respectively, and the distances between parts are reduced.

In case of composite resistor 3A of thyristor module in this embodiment, DC voltage dividing resistor 15A is provided at the upper side and snubber resistor 16A is provided at the lower side as shown in FIGURE 1. Accordingly, terminal 3a1 is provided at the upper side projecting therefrom and terminal 3c1 is provided at the lower end projecting therefrom, which are different from the positions shown in FIGURE 14A. Terminal 3b1 is provided at the intermediate side projecting from composite resistor 3A the same as shown in FIGURE 14A.

In composite resistor 3A, DC voltage dividing resistor 15A and snubber resistor 16A are provided as follows. Between terminals 3a1 and 3b1 DC voltage dividing resistor 15A is formed by winding a resistance wire in a cylindrical form, and between terminals 3b1 and 3c1 snubber resistor 16A is formed by winding another resistance wire in a cylindrical form. Furthermore, in composite resistor 3A, a terminal 3d1 is provided on the top projecting therefrom, which is not connected to an inner resistance wire and used for mechanical fixing and potential fixing, the same as composite resistor 23A in FIGURE 14A. Composite resistors 3B-3N are respectively constructed the same as composite resistor 3A described above.

FIGURE 2 is a perspective view of the thyristor module according to this embodiment showing the connection layout of composite resistors 3A and 3B, snubber capacitors 4A and 4B, water-cooled heat sinks 5A, 5B and 5C, and corresponds to the connection layout drawing by the conventional technology shown in FIGURE 19. In FIGURE 2, thyristors 2A and 2B are not shown for the same reason as described above.

FIGURE 2 differs from FIGURE 19 in that terminal 3d1 of composite resistor 3A is connected to termianl 3a1 instead of being connected to terminal 5a1 of water-cooled heat sink 5A. Similarly, terminal 3d2 of composite resistor 3B is connected to terminal 3a2 instead of being connected to terminal 5a2 of water-cooled heat sink 5B. Furthermore, terminal 3a1 of composite resistor 3A is connected via a bus bar to terminal 4b1 at the upper side of snubber capacitor 4A, and terminal 3a2 of composite resistor 3B is connected via a bus bar to terminal 4b2 at the upper side of snubber capacitor 4B.

Further, terminal 3a1 of composite resistor 3A is connected to terminal 5a2 of water-cooled heat sink 5B, and terminal 3c1 of composite resistor 3A is connected to terminal 4a1 at the lower side of snubber capacitor 4A.

Similarly, terminal 3a2 of composite resistor 3B is connected to terminal 5a3 of water-cooled heat sink 5C, and terminal 3c2 of composite resistor 3B is connected to termianl 4a2 at the lower side of snubber capacitor 4B. Furthermore, terminal 3a1 of composite resistor 3A is connected to terminal 3b2 of composite resistor 3B.

Further, the connection between composite resistor 3N, snubber capacitor 4N, water-cooled heat sinks 5D and 5N and others is the same as described above, so that the detailed' desciption is omitted.

On thyristor module constructed as described above, as terminal 3d1 of composite resitor 3A is connected to terminal 3a1 thereof and terminal 3d2 of composite resistor 3B is connected to terminal 3a2 thereof the potential between respective terminals will become the same level. Accordingly, as it is unnecessary to consider an insulated creeping distance between these terminals 3a1 and 3d1 and that between terminals 3a2 and 3d2, it is possible to make small the external shape of composite resistors 3A-3N.

Specifically, the length between terminal 3a1 and the top surface of composite resistor 3A can be made extremely smaller than that between terminal 3c1 and the top surface of composite resistor 23A shown in FIGURE 14A. This is also applied to composite resistors 3B-3N.

As the length of each of composite resistors 3A-3N is made small, which is larger in height than thyristor stack 1 and snubber capacitors 4A-4N, the external shape of the thyristor module according to this embodiment can be made smaller.

Futhermore, the wiring between these parts is more simplified than that of the thyristor module shown in FIGURE 19.

Specifically, as the connection between terminals 3a1 and 4b1, and the connection between terminals 3a2 and 4b2 are completed by the bus bars, it is not required to wire between terminals by detouring the upper rear of respective composite resistors as shown in FIGURE 19. Therefore, not only the wiring work is facilitated, but also inductane by this wiring can be reduced.

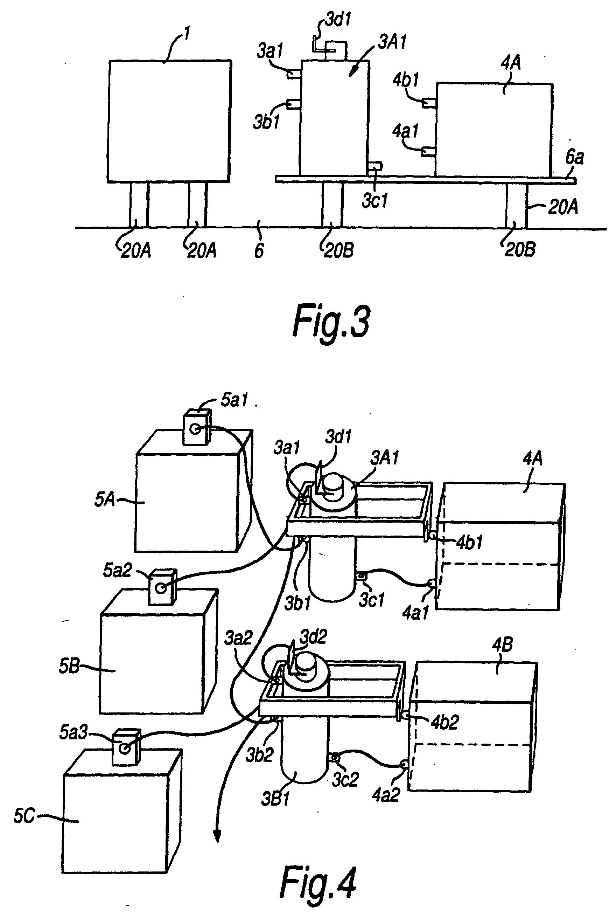

FIGURE 3 is a sectional view of a thyristor module according to a second embodiment of the present invention corresponding to a section along line B-B in FIGURE 12. Further, FIGURE 4 is a perspective view of a part of the thyristor module according to this embodiment, corresponding to FIGURE 2. In this thyristor module, composite resistors 3A1-3N1 are used instead of composite resistors 3A-3N in FIGURE 2.

FIGURES 3 and 4 differ from FIGURES 1 and 2 in that terminals 3c1 and 3c2 of composite resistors 3A1 and 3B1 are respectively provided at the side opposite to terminals 3a1 and 3b1, 3a2 and 3b2 of composite resistors 3A1 and 3B1, projecting therefrom and facing snubber capacitors 4A and 4B.

Accordingly, as terminals 3c1 of composite resistor 3A1 and terminal 4a1 of snubber capacitor 4A and terminal 3c2 of composite resistor 3B1 and terminal 4a2 of snubber capacitor 4B can be respectively connected by wires at shortest distances, not only wiring of these terminals is facilitated but also inductance of the wires can be reduced.

Further, in FIGURE 3 thyristor stack 1 is insulated from mounting plate 6 by insulators 20A at both ends, composite resistor 3A1 and snubber capacitor 4A are mounted on a unit base 6a and this unit base 6a is insulated from mounting plate 6 by insulators 20B. In this respect, the thyristor module according to the first embodiment and the thyristor modules according to the following embodiments are constructed the same as shown in FIGURE 3.

In FIGURE 4, it is not neceseary to route wires for connecting between composite resistors 3A1 and 3B1 and respective snubber capacitors 4A and 4B via the side of or above composite resistors 3A1 and 3B1. As a result, the distance between composite resistors 3A1 and 3B1 is made smaller than that between composite resistors 23A and 23B shown in FIGURE 19 from the withstanding voltage viewpoint. Similarly, the distances between adjacent composite resistors 3B1-3N1, the distances between adjacent snubber capacitors 4A-4N and the distances between adjacent water-cooled heat sinks 5A-5N are made smaller than those shown in FIGURE 19. As a result, the external shape of the thyristor module according to this embodiment can be made smaller than that of the thyristor module according to the first embodiment shown in FIGURE 2.

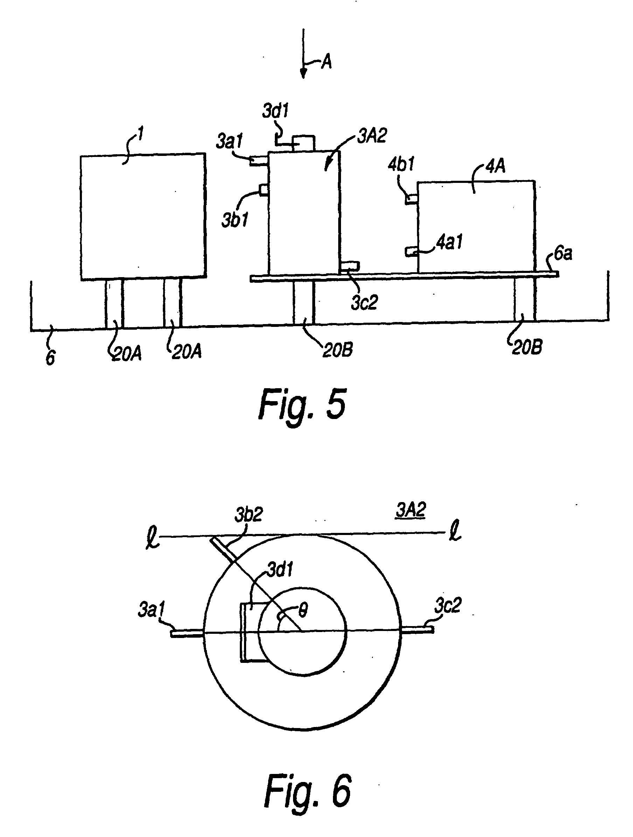

Next, FIGURE 5 is a sectional view of a thyristor module according to a third embodiment of the present invention and is corresponding to FIGURE 3. Further, FIGURE 6 is a top view of a composite resistor 3A2 seen from an arrow A in FIGURE 5. In this embodiment, composite resistors 3A2-3N2 are used instead of composite resistors 3A1-3N1 shown in FIGURE 3.

What is differing from FIGURE 3 in the embodiment shown in FIGURE 5 is a mounting angle θ of terminal 3b1 of composite resistor 3A2; that is, its position is moved backward by about 50 degree (θ=50°) from terminal 3a1 as shown in FIGURE 6. In FIGURE 6, angel θ between terminal 3a1 and terminal 3b1 is determined such that the tip of terminal 3b1 does not protrude beyond a tangent line 1-1 of composite resistor 3A2 parallel to a line between terminals 3a1 and 3c1 in FIGURE 6. Similarly, composite resistors 3B2-3N2 are constructed the same as composite resistor 3A2 with respect their terminals 3b2-3bn.

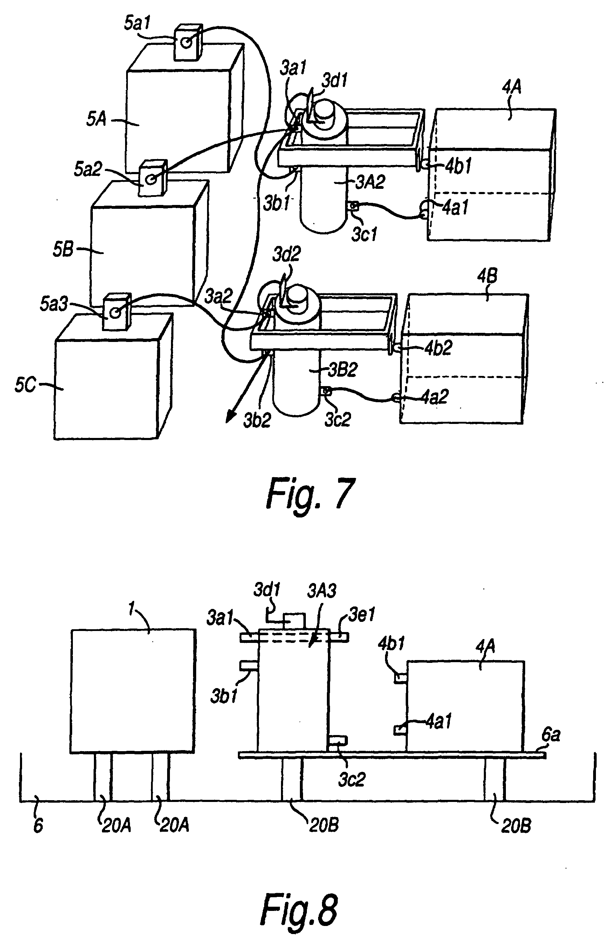

FIGURE 7 is a perspective view of the thyristor module according to this embodiment, in such construction as described above and is corresponding to FIGURE 4. In FIGURE 7, when compared with the thyristor module shown in FIGURE 4, it is poeeible to separate the crossing points of wires connecting composite resistors 3A2 and 3B2 with water-cooled heat sinks 5A, 5B and 5C, and therefore, there is a merit to facilitate the wiring in addition to the merit of the thyristor module shown in FIGURE 4.

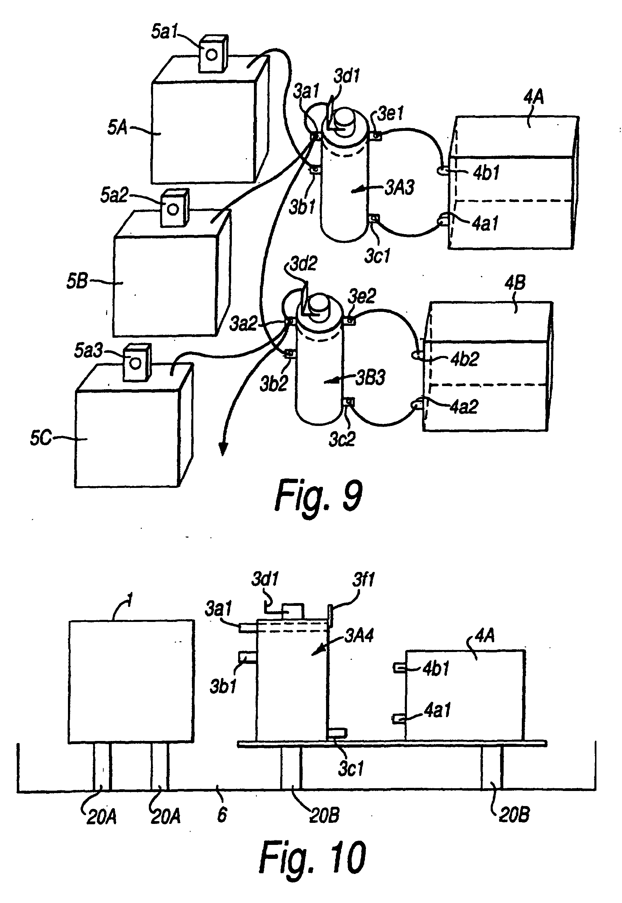

FIGURE 8 is a sectional view of a thysistor module according to a fourth embodiment of the present invention and is corresponding to FIGURE 3. Further, FIGURE 9 is a perspecive view of the thyristor module according to this embodiment, and is corresponding to FIGURE 4.

In this embodiment, composite resistors 3A3-3N3 are used instead of composite resistors 3A1-3N1 shown in FIGURE 3.

In FIGUREs 8 and 9, what is different from FIGUREs 3 and 4 is that the number of terminals of composite resistors 3A3 and 3B3 are increased; that is, a terminal 3e1 is provided at the upper right side of composite resistor 3A3, projecting therefrom in FIGURE 8. This terminal 3e1 is internally connected to terminal 3a1. Composite resistors 3B3-3N3 are respectively provided with terminals 3e2-3en the same as composite resistor 3A3.

In this case, the wiring for connecting snubber capacitor 4A to composite resistor 3A3 is completed by connecting terminals 3e1 and 4b1 which are facing each other and also, the wiring for connecting snubber capacitor 4B to composite resistor 3B3 is also completed by connecting terminals 3e2 and 4b2 which are facing each other. Accordingly, it is not required to wire them by detouring the upper rear of respective composite resistors as shown in FIGURE 19, and therefore, not only the wiring work is facilitated but also inductance by this wiring can be reduced.

Next, FIGURE 10 is a sectional view of a thyristor module according to a fifth embodiment of the present invention and is corresponding to FIGURE 8. Further, FIGURE 11 is a perspective view of the thyristor module according to this embodiment, and is corresponding to FIGURE 9. In this embodiment, composite resistors 3A4-3N4 are used instead of composite resistors 3A3-3N3 shown in FIGURE 8, and is corresponding to FIGURE 9.

FIGUREs 10 and 11 differ from FIGUREs 8 and 9 in that the positions of terminals on the top of composite resistors 3A4 differ from that in FIGUREs 8 and 9 and all others remain the same as in FIGUREs 8 and 9. Composite resistors 3B4-3N4 are constructed the same as composite resistor 3A4 as described below.

That is, a terminal 3f1 is provided at the right side on the top of composite resistor 3A4 projecting therefrom instead of terminal 3e1 in composite resistor 3A3. This terminal 3f1 is connected to terminal 3a1 provided at the left side through an internal connecting band plate. Similarly, a terminal 3f2 provided at the right side on the top of composite resistor 3B4 projecting therefrom also is connected to terminal 3a2 provided at the left side through an internal connecting band plate. In this embodiment, the wiring is completed the same as the embodiment shown in FIGURE 9. Accordingly, not only the wiring work is facilitated but also inductance by this wiring can be reduced the same as the embodiment shown in FIGURE 9.

As described above, according to this invention it is possible to make small the external shape of the composite resistor. As a result, it is possible to provide a thyristor module of which external shape is made small.

Furthermore, according to this invention it is possible to make the distances between parts mounted in a thyristor module can be made small. As a result, it is possible to provide a thyristor module of which external shape is made small.

It is to be understood that within the scope ot the appended claims, the invention may be practiced otherwise than as specifically described herein.

## Claims

1. A thyristor module for mounting a circuit composed of a plurality of series connected thyristors, a plurality of DC voltage dividing resistors, each being respectively connected in parallel with one of said thyristors, and a plurality of series circuits of a snubber resistor and a snubber capacitor, each being respectively connected in parallel with one of said thyristors, said thyristor module comprising;
a mounting board,
a thyristor stack mounted on said mounting board, composed of said thyristors and a plurality of heat sinks for cooling said thyristors;
a plurality of composite resistors mounted on said mounting board and arranged behind said thyristor stack;
a plurality of snubber capacitors mounted on said mounting board and arrange behind said composite resistors; and
wiring means for connecting between said composite resistors, said heat sinks and said snubber capacitors to form said circuit;
each of said heat sinks being provided with a terminal electrically connected to at least an anode electrode and a cathode electrode of one of said thyristors, respectively;
each of said composite resistors having at least three terminals to form said DC voltage dividing resistor between an upper side terminal and an intermediate terminal and to from said snubber resistor between said intermediate terminal and a lower side terminal; and
each of said snubber capacitors being provided with terminals projecting to one of said composite resistors, respectively.

2. The thyristor module according to Claim 1, wherein:
each of said composite resistors is further provided with a top terminal mounted on the top of said composite resistor for fixing said composite resistor mechanically and keeping the potential of said composite resistor at a predetermined level.

3. The thyristor module according to Claim 2, wherein:
each of said upper side terminals of said composite resistors is composed of a pair of terminals connected to each other projecting to the side of said thyristor stack and to the side of one of said snubber capacitors, respectively.

4. The thristor module according to Claim 2, wherein:
each of said lower side terminals of said composite resistors projects to the side of one of said snubber capacitors, respectively.

5. The thyristor module according to Claim 2, wherein:
in each of said composite resistors, said upper side terminal is electrically connected to said top terminal.

## Patentansprüche

1. Tyristor-Modul zum Aufbau eines Schaltkreises, der aus
einer Mehrzahl von in Reihe geschalteten Tyristoren,
einer Mehrzahl von Gleichspannungsteiler-Widerstandselementen, von denen jedes mit jeweils einem der besagten Tyristoren parallel geschaltet ist, und
einer Mehrzahl von Reihenschaltungen aus je einem Dämpfungs-Widerstandselement und einem Dämpfungs-Kondensator, die mit je einem der besagten Tyristoren parallel geschaltet sind,
besteht,
wobei besagtes Tyristor-Modul umfaßt:
- eine Platine,
- einen auf besagter Platine befestigten Tyristor-Stapel, der aufgebaut ist aus besagten Tyristoren und einer Mehrzahl von Wärmesenken zur Kühlung besagter Tyristoren,
- eine Mehrzahl von Kombinationswiderständen, die auf besagter Platine befestigt und hinter besagtem Tyristor-Stapel angeordnet sind,
- eine Mehrzahl von Dämpfungs-Kondensatoren, die auf besagter Platine befestigt und hinter besagten Kombinationswiderständen angeordnet sind, sowie
- Verdrahtungsmittel zur Herstellung von Verbindungen zwischen besagten Kombinationswiderständen, besagten Wärmesenken und besagten Dämpfungs-Kondensatoren zur Bildung besagten Schaltkreises,
wobei jede der besagten Wärmesenken ausgestattet ist mit einem Anschlußpunkt, der wenigstens mit einer Anode eines der besagten Tyristoren und einer Kathode eines der besagten Tyristoren elektrisch verbunden ist und
wobei jeder der besagten Kombinationswiderstände wenigstens drei Anschlußpunkte aufweist, und zwar
zur Bildung besagten Gleichspannungsteiler-Widerstandselementes zwischen einem oberen und einem mittleren Anschlußpunkt und
zur Bildung besagten Dämpungs-Widerstandselementes zwischen besagtem mittlerem Anschlußpunkt und einem unteren Anschlußpunkt und
wobei jeder der besagten Dämpfungs-Kondensatoren mit Anschlüssen ausgestattet ist, die jeweils zu einem der besagten Kombinationswiderstände hin vorspringen.

2. Tyristor-Modul gemäß Anspruch 1, **dadurch gekennzeichnet, daß** jeder der besagten Kombinationswiderstände weiter ausgestattet ist mit einem spitzenseitigen Anschlußpunkt, der an der Spitze besagten Kombinationswiderstandes angeordnet ist und der mechanischen Festlegung besagten Kombinationswiderstandes sowie dazu dient, das Potential besagten Kombinationswiderstandes auf einem vorgegebenen Wert zu halten.

3. Tyristor-Modul gemäß Anspruch 2, **dadurch gekennzeichnet, daß** jeder der oberen Anschlüsse besagten Kombinationswiderstandes aus einem Paar von Anschlußpunkten aufgebaut ist, die miteinander verbunden sind und zu der Seite besagten Tyristor-Stapels bzw. zu der Seite eines der besagten Dämpfungs-Kondensatoren hin vorspringen.

4. Tyristor-Modul gemäß Anspruch 2, **dadurch gekennzeichnet, daß** jeder der besagten unteren Anschlüsse besagten Kombinationswiderstandes zu der Seite eines der besagten Dämpfungskondensatoren hin vorspringt.

5. Tyristor-Modul gemäß Anspruch 2, **dadurch gekennzeichnet, daß** bei jedem der besagten Kombinationswiderstände besagter oberer Anschluß elektrisch mit besagtem spitzenseitigem Anschluß verbunden ist.

## Revendications

1. Module à thyristors pour assembler un circuit composé d'une pluralité de thyristors connectés en série, d'une pluralité de résistances diviseuses de tension continue, chacune étant respectivement connectée en parallèle avec un desdits thyristors, et d'une pluralité de circuits en série d'un résistance d'amortissement et d'un condensateur d'amortissement, chacun étant respectivement connecté en parallèle avec un desdits thyristors, ledit module à thyristors comprenant :
une plaque de montage,
une pile de thyristors montée sur ladite plaque de montage, composée desdits thyristors et d'une pluralité de dissipateurs de chaleur pour refroidir lesdits thyristors ;
une pluralité de résistances composites montées sur ladite plaque de montage et disposées derrière ladite pile de thyristors ;
une pluralité de condensateurs d'amortissement montés sur ladite plaque de montage et disposés derrière lesdites résistances composites ; et
des moyens de câblage pour interconnecter lesdites résistances composite, lesdits dissipateurs de chaleur et lesdits condensateurs pour former ledit circuit ;
chacun desdits dissipateurs de chaleur étant prévu avec une borne électriquement connectée à au moins une électrode anodique et une électrode cathodique d'un desdits thyristors, respectivement ;
chacune desdites résistances composites ayant au moins trois bornes pour former ladite résistance diviseuse de tension continue entre une borne supérieure latérale et une borne intermédiaire et pour former ladite résistance d'amortissement entre ladite borne intermédiaire et une borne inférieure latérale ; et
chacun desdits condensateurs d'amortissement étant équipé de bornes avançant vers une desdites résistances composites, respectivement.

2. Module à thyristors selon la revendication 1, dans lequel :
chacune desdites résistances composites est en outre équipée d'une borne supérieure montée au sommet de ladite résistance composite pour fixer mécaniquement ladite résistance composite et maintenir le potentiel de ladite résistance composite à un niveau prédéterminé.

3. Module à thyristors selon la revendication 2, dans lequel :
chacune desdites bornes supérieures latérales desdites résistances composites est composée d'une paire de bornes connectées entre elles faisant saillie respectivement du côté de ladite pile de thyristors et du côté d'un desdits condensateurs d'amortissement.

4. Module à thyristors selon la revendication 2, dans lequel :
chacune desdites bornes inférieures latérales desdites résistances composites fait saillie du côté de l'un desdits condensateurs d'amortissement respectifs.

5. Module à thyristors selon la revendication 2, dans lequel :
dans chacune desdites résistances composites, ladite borne supérieure latérale est électriquement connectée à ladite borne supérieure.
